(19) **Europäisches Patentamt / European Patent Office / Office européen des brevets**

(11) **EP 2 483 535 B1**

(12) # FASCICULE DE BREVET EUROPEEN

(45) Date de publication et mention de la délivrance du brevet:
**12.06.2013 Bulletin 2013/24**

(21) Numéro de dépôt: **10752879.6**

(22) Date de dépôt: **27.07.2010**

(51) Int Cl.:
*F01N 3/20* *(2006.01)*     *F01N 11/00* *(2006.01)*

(86) Numéro de dépôt international:
**PCT/FR2010/051591**

(87) Numéro de publication internationale:
**WO 2011/039438 (07.04.2011 Gazette 2011/14)**

(54) **DISPOSITIF D'INJECTION DANS UNE LIGNE D'ECHAPPEMENT D'UN AGENT REDUCTEUR GAZEUX**

VORRICHTUNG ZUR EINSPRITZUNG EINES GASFÖRMIGEN REDUKTIONSMITTELS IN EINE ABGASLEITUNG

DEVICE FOR INJECTING A GASEOUS REDUCING AGENT INTO AN EXHAUST LINE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.09.2009 FR 0956771**

(43) Date de publication de la demande:
**08.08.2012 Bulletin 2012/32**

(73) Titulaire: **Peugeot Citroën Automobiles SA 78140 Vélizy Villacoublay (FR)**

(72) Inventeurs:
• CHARIAL, Christophe
  **F-78760 Jouars-Pontchartrain (FR)**
• GRISE, Clément
  **F-75011 Paris (FR)**

• MARTINOT, Stéphane
  **F-92700 Colombes (FR)**
• LEFEVRE, Jean-Philippe
  **F-78250 Oinville Sur Montcient (FR)**

(74) Mandataire: **Renous Chan, Véronique Peugeot Citroen Automobiles SA Propriété Industrielle - LG081 18 rue des Fauvelles 92250 La Garenne Colombes (FR)**

(56) Documents cités:
**EP-A- 0 679 427       EP-A- 1 977 817**
**US-A1- 2001 053 342   US-A1- 2003 213 234**
**US-A1- 2004 031 263   US-A1- 2009 004 083**
**US-B1- 6 301 879**

EP 2 483 535 B1

**Description**

La présente invention concerne l'injection dans une ligne d'échappement d'un agent réducteur injecté sous forme gazeuse.

L'utilisation de combustible fossile comme le pétrole ou le charbon dans un système de combustion, en particulier le carburant dans un moteur, entraine la production en quantité non négligeable de polluants qui peuvent être déchargés par l'échappement dans l'environnement et y causer des dégâts. Parmi ces polluants, les oxydes d'azote (appelés NOx) posent un problème particulier puisque ces gaz sont soupçonnés d'être un des facteurs qui contribuent à la formation des pluies acides et à la déforestation. En outre, les NOx sont liés à des problèmes de santé pour les humains et sont un élément clé de la formation de « smog » (nuage de pollution) dans les villes. La législation impose des niveaux de rigueur croissante pour leur réduction et/ou leur élimination de sources fixes ou mobiles.

Parmi les polluants que les législations tendent à réglementer de façon de plus en plus stricte figurent également les suies ou autres matériaux particulaires résultant essentiellement d'une combustion incomplète du carburant, plus particulièrement lorsque le moteur est opéré en mélange dit pauvre, c'est-à-dire avec un excédent d'oxygène (d'air) par rapport à la stoechiométrie de la réaction de combustion. Les mélanges pauvres sont de règle pour les moteurs dits diesel, dont l'allumage est obtenu par compression.

Pour limiter les émissions de NOx, la principale voie mise en oeuvre sur les véhicules actuels a été celle de la réduction des émissions à la source, autrement dit, en opérant le moteur dans des conditions telles que les taux de NOx produits soient inférieurs aux taux limites. Ces conditions sont réunies notamment en pilotant de manière très fine les différents paramètres du moteur, à commencer par les paramètres d'injection de carburant et de réinjection à l'admission d'une partie des gaz d'échappement, ceci afin de réduire la concentration en oxygène favorable à la formation des oxydes d'azote.

Les niveaux d'émission tolérés tendant à se sévériser, une autre solution consiste à utiliser des solutions de post-traitement, en introduisant un agent réducteur dans la ligne d'échappement. Ainsi, une solution de post-traitement ayant fait la preuve de son efficacité est l'utilisation d'une source d'ammoniac (NH$_3$).L'ammoniac réagit avec les NO$_x$ sur un catalyseur pour former de l'azote N$_2$ inerte et de l'eau H$_2$O. Cette solution est essentiellement connue sous le nom de son acronyme anglais SCR pour « Selective Catalytic Reduction ».

L'ammoniac étant lui-même un gaz dont les émanations sont nuisibles à la santé et posant de ce fait des problèmes de manutention et un risque de fuite si le véhicule est impliqué dans un choc, il est connu de le stocker dans un réservoir sous la forme d'urée en solution aqueuse, hydrolysé en ammoniac au contact des gaz d'échappement.

Apportée le réducteur sous forme liquide présente toutefois un certain nombre d'inconvénients. Tout d'abord, la limite de solubilité de l'urée est relativement élevée, de sorte que les solutions commercialisées pour les véhicules équipés d'un tel système catalytique sont typiquement constituer par une solution aqueuse à 30%, donc dont seulement un tiers du volume est réellement actif. Pour les poids lourds pour lesquels ces systèmes ont été tout d'abord développés, il est relativement facile d'embarquer un réservoir de quelques dizaines de litres. Par contre, pour les véhicules légers, l'encombrement d'un tel réservoir devient rapidement critique, et peu compromettre en particulier une partie du volume dédié à la roue de secours ou aux bagages.

Par ailleurs, le réducteur n'est effectif qu'après une phase d'hydrolyse ce qui impose une distance minimale entre le point d'injection et le catalyseur de réduction sélective, distance qu'il n'est pas toujours facile de respecter en particulier avec les véhicules légers dédiés à un usage urbain.

C'est pourquoi il a également été proposé de stocker le réducteur sous une forme solide et de le transformer en une espèce solide avant son injection dans la ligne d'échappement. Référence est faite par exemple à US 5,809,875 qui dans un contexte de moteurs industriels, propose de stocker de l'urée sous forme solide et de la transformer en ammoniac par chauffage dans un réacteur, où l'ammoniac est stocké à température élevée avant son injection dans la ligne d'échappement.

Il est également connu, par exemple de US 6,387,336 que certains sels, comme le chlorure de strontium, ont la capacité de stocker de l'ammoniac et de le relâcher après chauffage. WO 2006/081824 enseigne de plus comment réaliser des pastilles compactes d'un sel complexe capable de libérer de l'ammoniac après chauffage. US 2004/0031263 montre un dispositif d'injection connu dans l'état de la technique.

Les documents précités sont toutefois pratiquement muets sur la maitrise de la quantité d'ammoniac injectée sous forme gazeuse dans la ligne d'échappement. Or, la quantité injectée doit être à tout moment précisément dosée pour d'une part traiter effectivement tous les NOx présents dans les gaz d'échappement, sachant que d'une part la quantité de NOx à traiter varie constamment selon le fonctionnement du moteur, notamment suivant le régime moteur et le couple demandé à celui-ci, et que d'autre part, il n'est pas question de sur-doser la quantité d'ammoniac injectée pour éviter que des rejets d'ammoniac.

Il subsiste donc un besoin d'une architecture permettant la maîtrise de la quantité de réducteur gaz injecté.

Pour cela, il est proposé selon la présente invention une architecture de capteur/actionneur permettant la maitrise et la réalisation de la quantité de réducteur gazeux injectée, caractérisée en ce que l'injection est effectuée au travers d'un col sonique disposé juste en aval d'une électrovanne.

Plus précisément, l'invention a pour objet un dispositif d'injection dans une ligne d'échappement, d'un réactif gazeux, comportant un réservoir actif de gaz, une conduite d'amenée de réactif, une vanne, et des moyens limitateurs de débit disposés en aval de la vanne.

Les moyens limitateurs de débit sont constitués par un col sonique, c'est-à-dire un rétrécissement tel que le débit gazeux dans le col est fixe si la pression en amont du col est supérieure à la pression en aval du col. A noter que ce col doit constituer le point le plus étroit de la ligne d'injection, autrement dit, il ne peut pas y avoir de rétrécissement supérieur entre ce col et le point de jonction avec la ligne d'échappement. La vanne est de préférence disposée à proximité immédiate du col de sorte qu'elle en constitue l'entrée.

Dans ces conditions, la quantité de réactif injecté est strictement proportionnelle au temps d'ouverture de la vanne - autrement dit, cette quantité peut être contrôlée de manière simple par un simple pilotage de la vanne.

Pour calculer le débit, il est nécessaire de pouvoir estimer la pression à l'entrée du col sonique. Dans une variante préférée de l'invention, ceci est obtenu en disposant un capteur de pression en amont de la vanne. Dans une variante, ce capteur est un capteur continu, capable de fournir un signal analogique qui peut être corrélé à la pression environnant ce capteur. Dans une variante, ce capteur est constitué par un simple manocontact.

Avantageusement, on prévoit de plus des moyens pour estimer la température à l'entrée des moyens limitateurs de débit, moyens qui peuvent être constitués par un capteur de température placés également dans la conduite d'amenée, juste en amont de la vanne.

Dans une variante de l'invention, le dispositif comporte de plus un moyen pour estimer la pression en aval des moyens limitateurs de débit.

Dans une variante préférée de l'invention, la vanne est une vanne de type électrovanne, par exemple de type on/off. Une vanne proportionnelle peut également être utilisée, mais elle sera alors essentiellement utilisée comme une vanne on/off.

Dans une variante, la vanne est pilotée par une unité de commande associée au calculateur de contrôle du moteur.

Dans une variante, le réservoir actif est associé à au moins une réserve. Chaque réserve est reliée à la conduite d'amenée de réactif par une dérivation munie d'un clapet anti-retour, l'ensemble des dérivations rejoignant la conduite d'amenée en un (ou plusieurs) point de piquage en amont de la vanne.

D'autres caractéristiques et avantages de l'invention apparaîtront à la lecture de la description détaillée qui suit des modes de réalisation de l'invention, donnés à titre d'exemple uniquement et en références à la figure unique qui montre un dispositif de régulation de l'injection de réducteur selon l'invention.

L'invention se rapporte à un dispositif d'injection dans une ligne d'échappement, d'un réactif gazeux, comportant une conduite d'amenée de réactif, une vanne, un capteur de pression en amont de la vanne et des moyens limitateurs de débit disposés en aval de la vanne de sorte qu'il est possible de maîtriser le débit de réducteur gaz avec précision. En outre, une telle architecture permet de maîtriser le débit avec un nombre réduit de composants, y compris ceux constitués par des capteurs, ce qui réduit le coût de l'ensemble réguler l'injection de manière simple et

La figure unique montre une ligne d'échappement munie d'un dispositif de traitement des NOx par réduction catalytique sélective à partir d'un réactif ajouté sous forme gazeuse.

La ligne d'échappement 1, typiquement reliée à un moteur à combustion interne de type Diesel, ou tout autre moteur fonctionnant sur de larges plages en mélange pauvre, c'est-à-dire avec un excès d'air par rapport au ratio oxygène carburant demandé par la réaction de combustion du carburant, comporte notamment un catalyseur d'oxydation 2, disposé en général en début de ligne pour recevoir des gaz le plus chaud possible, donc le principal rôle est de convertir le monoxyde de carbone produit par le moteur en dioxyde de carbone. Ce catalyseur convertit également les hydrocarbures gazeux également en dioxyde de carbone.

En aval de ce catalyseur d'oxydation, on a disposé un catalyseur de réduction sélective 3, dit SCR, qui peut être par exemple constitué par une couche d'oxyde de vanadium ou une zéolithe déposée sur un support en céramique, par exemple du type cordiérite.

Sur cette ligne, on a également représenté des moyens 4 pour estimer la température en aval du catalyseur d'oxydation 2 et des moyens 5 pour estimer la quantité de NOx en aval du catalyseur SCR, afin de s'assurer du fonctionnement du système de réduction, notamment de ce que l'injection de réducteur est bien effective.

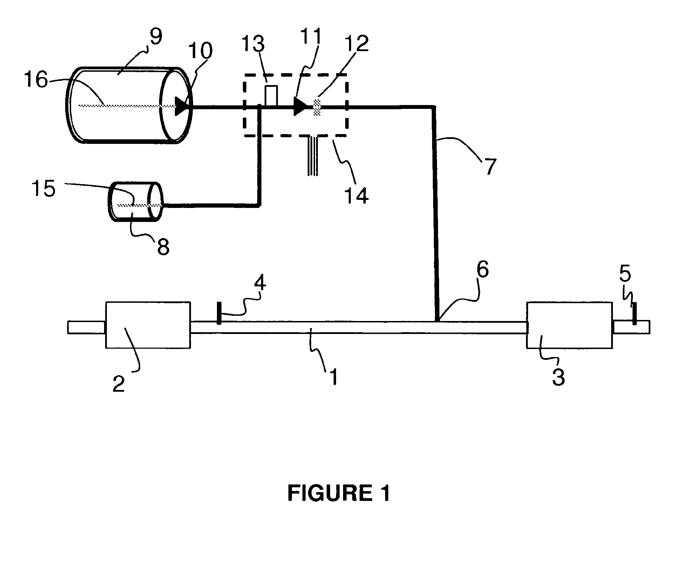

Même s'ils ne sont pas représentés sur la figure 1, la ligne d'échappement peut également comporter d'autres organes de dépollution, comme par exemple un filtre à particules, disposé en amont ou de préférence en aval du catalyseur SCR.

Le catalyseur SCR sert à favoriser la réduction des NOx par un réducteur. Ainsi, lorsque de l'ammoniac est utilisé, les NOx sont réduits en diazote et en vapeur d'eau essentiellement selon les 3 réactions suivantes:

$$4NH_3 + 4NO + O_2 \rightarrow 4N_2 + 6H_2O$$

$$2NH_3 + NO + NO_2 \rightarrow 2N_2 + 3H_2O$$

$$8NH_3 + 6NO_2 \rightarrow 7N_2 + 12H_2O$$

Le réactif réducteur, qui en substitution de l'ammoniac $NH_3$ pet également être par exemple de l'hydrogène ($H_2$) ou des hydrocarbures (HC) est injecté directement sous forme gazeuse dans la ligne d'échappement. Ainsi, le réactif est immédiatement disponible, ce qui permet de simplifier l'architecture de la ligne. En outre, ceci permet de limiter volume et masse du réservoir par rapport à l'utilisation d'urée, constituée à 70% d'eau. Le gaz réducteur est injecté dans la ligne d'échappement, en un point 6 en amont du catalyseur SCR 3, au moyen d'une conduite d'amenée 7 par exemple soudée en T sur la ligne d'échappement 1, dans un montage affleurant ou avec une conduite d'amenée 7 pénétrant légèrement dans la ligne 1.

L'ammoniac (ou tout autre agent réactif) est de préférence stocké dans au moins deux réservoirs, tous deux reliés à la une conduite d'amenée, un moyen de régulation étant interposé sur cette conduite pour contrôler précisément la quantité de réactif injectée. Le plus petit réservoir constitue le réservoir actif 8, dans lequel le réactif est stocké sous forme gazeuse ou du moins capable de libérer le réactif sous forme gazeuse. Le volume de ce réservoir actif est de préférence compris entre 300 et 700ml, et avantageusement de l'ordre de 400ml, soit de l'ordre de grandeur de la quantité d'ammoniac nécessaire pour traiter les NOx émis par la combustion d'une quantité de carburant correspondant à deux pleins de réservoir carburant.

Le second réservoir, qui sera par la suite également qualifié de réserve 9, a pour sa part un volume beaucoup plus important que celui du réservoir actif, et sera typiquement conçu d'une manière telle qu'il suffise pour fournir tout l'ammoniac nécessaire pour traiter tous les NOx émis par le véhicule sur une période relativement longue, couvrant par exemple l'intervalle entre deux maintenances recommandées (soit par exemple tous les 30000km).

Ce second réservoir est avantageusement isolé du dispositif d'injection par un clapet anti-retour 10. Par contre, le réservoir actif est simplement relié à la conduite d'amenée.

A noter qu'il est aussi possible de prévoir plus d'une réserve, ce qui permet d'augmenter la quantité de réactif embarquée - et donc l'autonomie du véhicule - et/ou de répartir la masse de réactif en différents points du véhicule. Chaque réserve sera alors munie d'un clapet anti-retour.

Tous les réservoirs ou réserves sont munis de moyens pour créer une dépression et/ou pour apporter des calories afin de libérer le gaz stocké. Avantageusement, ces moyens sont constitués par une résistance chauffante.

Plutôt que de stocker le gaz dans une enceinte pressurisée, il peut l'être sous une forme solide, par exemple dans le cas de l'ammoniac sous la forme d'un sel complexe de formule $M(NH_3)_mX_2$, où M est choisi parmi Li, Mg, Ca, Sr, V, Cr, Mn, Fe, CO, Ni, Cu et Zn et où est m est compris entre 2 et 12 et X est F, Cl, Br, I, SO4, $MoO_4$ ou $PO_4$ obtenu après absorption de $NH_3$ par un sel de type $MX_2$. Un exemple d'un tel sel complexe est le $Mg(NH3)_6Cl_2$, comportant 51.7% d'ammoniac, compacté. La demande de brevet WO2007/095955 enseigne un procédé de compactage pouvant être mis en oeuvre pour l'invention.

Le gaz est libéré des réservoirs par apport thermique ou par une baisse de pression. Ainsi, chaque réservoir peut être équipé de moyens de chauffage 15 et 16, pilotés au fur et à mesure des besoins comme il sera détaillé plus ioin.

Les moyens de régulation de l'injection sont essentiellement constitués par une vanne d'obturation 11, par exemple une électrovanne de type on/off, c'est-à-dire capable d'être placée entre une première position où la conduite est totalement obturée, de sorte qu'aucun gaz n'est introduit dans la ligne, à la position inverse.

En aval de cette vanne sont prévus des moyens limitateurs de débit 12. Ces moyens sont constitués par un simple col sonique, c'est-à-dire par un rétrécissement dont l'étroitesse est telle que le débit d'écoulement du gaz dans ce col est constant.

En amont de la vanne sont disposés des moyens 13 sensibles à la pression. Il doit être noté que la vanne est de préférence disposée le plus près possible de l'entrée du col sonique.

Le simple pilotage de la vanne suffit pour maitriser précisément la quantité de réactif gazeux injectée. En pratique, l'ensemble des moyens de régulation est regroupé dans un boitier 14, reliés à une unité de contrôle moteur et recevant et émettant des signaux de et vers ce contrôle moteur. A noter par ailleurs que la figure 1 n'est en aucun cas une représentation à l'échelle, la conduite d'amenée 7 pouvant avoir par exemple une longueur totale allant jusqu'à 4 mètres, alors que le boitier 14 est d'une longueur par exemple inférieure à 10 cm.

Selon la formule de Barré de Saint Venant, dans un col sonique de section S, le débit d'un gaz de masse moléculaire M, et dont le rapport $\gamma$ des chaleurs spécifiques respectivement à pression constante et à volume constant

$(\gamma = Cp/Cv)$, dépend exclusivement de la pression et de la température en entrée du col :

$$Débit = \frac{S}{\sqrt{Te}} * Pe * \left(\frac{2}{\gamma+1}\right) * \left(\frac{1}{\gamma-1}\right) * \sqrt{\frac{2*\gamma*M}{(\gamma+1)*R}}$$

Dans la formule ci-dessus, R est la constante des gaz parfaits.

Cette équation se vérifie si la pression en aval du col est telle que :

$$Paval < Pe * \left(\frac{2}{\gamma+1}\right)^{\frac{\gamma}{\gamma-1}}$$

Pour l'ammoniac, à 15°C, sous pression atmosphérique (1,013 bars), le rapport $\gamma$ est égal à 1,3096, donc cette condition est remplie si la pression en aval du col est environ inférieure à 0,54 fois la pression à l'entrée du col. Cette pression en aval du col est égale à la pression dans la ligne d'échappement, qui est toujours inférieure à 1,5 bars (150kPa). Donc, si on choisit d'opérer avec une pression en entrée de col de plus de 2,75 bars, la condition est toujours vérifiée.

Dans ces conditions, on peut calculer qu'avec un col de 0,4mm de diamètre, en fonction de la température Te (température absolue en degrés Kelvin) en entrée de col et de la pression en entrée de coi, on pourra par exemple obtenir les débits suivants :

| Te | Pe | Débit |
|---|---|---|
| 20°C | 2,8 bars - 280 kPa | 62,2mg/s |
| 40°C | 2,8 bars - 280 kPa | 60,1 mg/s |
| 20°C | 4 bars - 400kPas | 88,8 mg/s |

Pour un véhicule de tourisme ou un utilitaire léger, pour traiter des gaz d'échappement avec de l'ammoniac, le débit requis est en moyenne entre 5 et 10 mg/s et pour l'ensemble des points de fonctionnement du moteur peut varier entre 2 et 60 mg/s (les points les plus critiques correspondants à des régimes transitoires). On voit donc d'après le tableau ci-dessus qu'une pression de 2,8 bars en entrée de col est systématiquement suffisante, sans qu'il ne soit même nécessaire de prévoir un capteur de pression en aval du col.

Pour ajuster le débit à la demande, fournie par exemple via une cartographie établie lors d'essais sur bancs moteurs, on va alors simplement faire varier les intervalles de temps d'ouverture et de fermeture. Ainsi, si on souhaite un débit de 20mg/s, on ouvrira la vanne pendant environ 1/3 du temps, avec un temps d'ouverture, deux temps de fermeture (par rapport à une horloge interne pilotant l'électrovanne par exemple selon une fréquence de 50Hz).

A l'arrêt du moteur, l'électrovanne est en position fermée. Au démarrage du moteur, on commence à chauffer le réservoir actif. De ce fait, l'ammoniac est libéré et la pression dans la conduite d'amenée, en amont de la vanne va croître rapidement pour atteindre par exemple 3 bars. Simultanément, les gaz d'échappement qui s'écoulent dans la ligne 1 échauffent le catalyseur SCR qui ne devient réellement efficace qu'une fois à plus de 150°C. En pratique, le temps de préchauffage du catalyseur est plus long que le temps nécessaire pour atteindre la pression d'entrée souhaitée.

Dans une première variante de l'invention, cette pression peut être contrôlée au moyen d'un manocontact. Les manocontacts, tels que ceux divulgués dans le document FR-A-2 725 245, permettent de convertir une pression en un signal électrique délivré au calculateur. Les mouvements d'une membrane dans une chambre en fonction de la pression régnant dans la chambre permettre d'ouvrir ou de fermer un contact électrique ce qui délivre ou non un signal électrique. Il s'agit d'un signal binaire : tant que le manocontact est ouvert, la pression est trop faible, et on peut par exemple augmenter la chaleur fournie aux moyens de stockage. Si le manocontact est fermé, la pression est au-delà du seuil de pression et on peut alors arrêter les moyens de chauffage. Comme le volume du réservoir actif est petit, l'inertie du système est faible de sorte qu'en pilotant simplement le chauffage dans le réservoir actif, on peut en fait contrôler la pression en entrée de col. Eventuellement, on peut également prévoir d'utiliser deux manocontacts, le second étant taré à une pression légèrement supérieure à la pression utilisée pour le tarage du premier manocontact. L'utilisation d'un second manocontact peut également servir pour déclencher une alerte si la pression en amont de la vanne devait excéder une valeur critique donnée.

Alternativement, on peut également utiliser un capteur de pression capable de fournir un signal analogique. Avec un tel capteur de pression, la pression mesurée peut être utilisée pour calculer la valeur de débit et le temps d'ouverture de la vanne correspondant, ce calcul pouvant être effectué par un calculateur embarqué ou utilisant des cartographies pré-chargées.

Dans la formule de calcul du débit, la température en entrée de col est également un paramètre clef, même si on calcule aisément qu'une augmentation de température de 60°C ne conduit qu'à une variation de débit de l'ordre de -10%. Comme le col est le point le plus étroit de la conduite d'amenée, et que par conséquent, le débit en aval du col est dicté par le débit dans le col, il est possible que le col soit placé en un point relativement éloigné de la ligne d'échappement, par exemple jusqu'à 4 mètres de distance, de sorte que la température en entrée de col soit en fait essentiellement égale à la température ambiante extérieure. Cette température étant déjà utilisée par l'unité de calcul moteur, son acquisition ne demande pas de capteur supplémentaire. Si un écart de température est constaté lors d'essais, il est également possible de prévoir un estimateur pour corriger cette valeur, par exemple pour tenir compte de la chaleur fournie pour libérer l'ammoniac. Alternativement, un capteur de température peut être prévu en entrée de col.

Dans une variante, le dispositif comprend en outre des organes de détection de la pression en aval du dispositif limitateur de pression, l'organe de détection de pression en aval par exemple un capteur de pression ou un manocontact. A noter que comme indiqué précédemment, si on choisit de n'opérer l'injection qu'à la condition que la pression en amont du col soit au-delà d'une pression seuil, il n'est plus besoin de disposer d'un capteur en aval du col.

Lorsque le réservoir actif commence à se vider (ce qui peut être estimé de manière simple en fonction du temps d'ouverture de la vanne), on va commander le chauffage du réservoir principal, de sorte que la pression en amont du clapet anti-retour provoque l'ouverture de ce dernier. Lors des temps d'ouverture de l'électrovanne, une partie de l'ammoniac libérée par le réservoir principal va être injectée dans la ligne, une autre partie servant à remplir le réservoir actif. Pendant les temps de fermeture, seule l'opération de remplissage du réservoir se poursuit. De toute façon, en contrôlant les moyens de chauffe dans les deux réservoirs, on continue à réguler la pression en entrée du col sonique.

Il doit être souligné que les moyens d'injection sont de fait constitués par une électrovanne unique, montée juste en amont du col sonique. Aucun dispositif d'injection n'est nécessaire en aval du col sonique, le seul point critique étant qu'aucun rétrécissement plus étroit que le col sonique ne doit être prévu en aval de celui-ci - ce qui compte tenu de l'étroitesse du col laisse une grande liberté y compris au niveau de la jonction avec la ligne d'échappement. Par ailleurs, la longueur de la conduite d'amenée, entre le col et la ligne d'échappement peut être choisie entre 0,5 et 4m par exemple. Autrement dit, il n'y a de fait aucune contrainte fonctionnelle pour l'implantation dans le véhicule des réservoirs et de l'ensemble constitué par les moyens sensibles à la pression, l'électrovanne et le col sonique.

Le pilotage de l'électrovanne et des moyens de chauffage des réservoirs est effectué par exemple directement par un module dédié du contrôle moteur, ce dernier comportant par ailleurs un module apte à calculer la quantité de NOx produite à tout instant, et la quantité d'agent réducteur nécessaire pour traiter celle-ci. Alternativement, ce module peut être monté dans un calculateur dédié aux moyens de post-traitement des NOx. Notons par ailleurs, que le réseau CAN du véhicule peut être utilisé pour piloter le système de chauffage des réservoirs à partir du module de calcul de l'injection des NOx.

A noter que l'invention a été avantageusement décrite dans une variante comportant une pluralité de réservoirs, avec un réservoir actif d'un volume relativement petit. Il est aussi possible de concevoir l'utilisation d'un seul réservoir actif, d'un plus grand volume, pressurisé, en prévoyant alors des moyens de type vanne en sortie de réservoir. Une telle variante n'est toutefois pas préférée car d'une part, le système est alors plus coûteux et d'autre part, son temps de mise en action est prolongé.

**Revendications**

1.  Dispositif d'injection dans une ligne d'échappement (1), d'un réactif gazeux, comportant un réservoir actif (8) de gaz, une conduite d'amenée (7) de réactif, une vanne (11), et des moyens limitateurs de débit (12) disposés dans la conduite d'amenée en aval de la vanne (11), **caractérisé en ce que** lesdits moyens limitateurs de débit (12) sont constitués par un col sonique.

2.  Dispositif selon la revendication 1, **caractérisé en ce qu'**il comporte en outre un capteur de pression (13) disposé en en amont de la vanne (11).

3.  Dispositif selon la revendication 2, **caractérisé en ce que** le capteur de pression (13) est un capteur continu.

4.  Dispositif selon la revendication 2, **caractérisé en ce que** le capteur de pression (13) est de type manocontact.

5.  Dispositif selon l'une quelconque des revendications précédentes, **caractérisé en ce qu'**il comporte de plus des moyens pour estimer la température à l'entrée des moyens limitateurs de débit.

**6.** Dispositif selon l'une quelconque des revendications précédentes, **caractérisé en ce qu'**il comporte également des moyens pour estimer la pression en aval des moyens limitateurs de débit.

**7.** Dispositif selon l'une quelconque des revendications précédentes, **caractérisé en ce que** la vanne est une électrovanne.

**8.** Dispositif selon l'une quelconque des revendications précédentes, **caractérisé en ce que** la vanne est pilotée par une unité de commande associée au calculateur de contrôle du moteur.

**9.** Dispositif selon l'une quelconque des revendications précédentes, **caractérisé en ce qu'**il comporte de plus au moins une réserve (9), munie d'un clapet anti-retour (10), reliée à la conduite d'amenée de réactif en un point en amont de la vanne.

**Patentansprüche**

**1.** Vorrichtung zur Einspritzung in eine Abgasleitung (1) eines gasförmigen Reduktionsmittels, die einen aktiven Gasbehälter (8), eine Zuführleitung (7) von Reagens, ein Ventil (11) und Durchflussbegrenzungsmittel (12) aufweist, die in der Zuführleitung stromaufwärts des Ventils (11) angeordnet sind, **dadurch gekennzeichnet, dass** die Durchflussbegrenzungsmittel (12) aus einem Schallhals bestehen.

**2.** Vorrichtung nach Anspruch 1, **dadurch gekennzeichnet, dass** sie ferner einen Drucksensor (13) aufweist, der stromaufwärts des Ventils (11) angeordnet ist.

**3.** Vorrichtung nach Anspruch 2, **dadurch gekennzeichnet, dass** der Drucksensor (13) ein kontinuierlicher Sensor ist.

**4.** Vorrichtung nach Anspruch 2, **dadurch gekennzeichnet, dass** der Drucksensor (13) des Typs Druckschalter ist.

**5.** Vorrichtung nach einem der vorhergehenden Ansprüche, **dadurch gekennzeichnet, dass** sie außerdem Mittel aufweist, um die Temperatur am Eingang der Durchflussbegrenzungsmittel zu schätzen.

**6.** Vorrichtung nach einem der vorhergehenden Ansprüche, **dadurch gekennzeichnet, dass** sie auch Mittel zum Schätzen des Drucks stromabwärts der Durchflussbegrenzungsmittel aufweist.

**7.** Vorrichtung nach einem der vorhergehenden Ansprüche, **dadurch gekennzeichnet, dass** das Ventil ein Magnetventil ist.

**8.** Vorrichtung nach einem der vorhergehenden Ansprüche, **dadurch gekennzeichnet, dass** das Ventil von einer Steuereinheit gesteuert wird, die mit dem Steuerrechner des Motors verbunden ist.

**9.** Vorrichtung nach einem der vorhergehenden Ansprüche, **dadurch gekennzeichnet, dass** sie außerdem mindestens eine Reserve (9) aufweist, die mit einem Rückschlagventil (10), das mit der Zuführleitung von Reagens an einer Stelle stromaufwärts des Ventils verbunden ist, versehen ist.

**Claims**

**1.** A device for injecting a gaseous reagent into an exhaust line (1), comprising an active gas tank (8), a reagent supply pipe (7), a valve (11), and flow-limiting means (12) arranged in the supply pipe downstream of the valve (11), **characterized in that** the said flow-limiting means (12) are constituted by a sonic throat.

**2.** The device according to Claim 1, **characterized in that** it further comprises a pressure sensor (13) arranged upstream of the valve (11).

**3.** The device according to Claim 2, **characterized in that** the pressure sensor (13) is a continuous sensor.

**4.** The device according to Claim 2, **characterized in that** the pressure sensor (13) is of the pressurestat type.

5. The device according to any one of the preceding claims, **characterized in that** it comprises in addition means for estimating the temperature at the inlet of the flow-limiting means.

6. The device according to any one of the preceding claims, **characterized in that** it also comprises means for estimating the pressure downstream of the flow-limiting means.

7. The device according to any one of the preceding claims, **characterized in that** the valve is an electrovalve.

8. The device according to any one of the preceding claims, **characterized in that** the valve is driven by a command unit associated with the control unit of the engine.

9. The device according to any one of the preceding claims, **characterized in that** it further comprises at least one reserve (9), provided with a checkvalve (10), connected to the reagent supply pipe at a point upstream of the valve.

EP 2 483 535 B1

**FIGURE 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5809875 A
- US 6387336 B
- WO 2006081824 A
- US 20040031263 A
- WO 2007095955 A
- FR 2725245 A